Europäisches Patentamt

European Patent Office

Office européen des brevets

(19)

(11) EP 0 835 752 A2

(12) EUROPEAN PATENT APPLICATION

(43) Date of publication:
15.04.1998 Bulletin 1998/16

(51) Int. Cl.$^6$: B32B 27/36, B41M 5/00

(21) Application number: 97117313.3

(22) Date of filing: 07.10.1997

(84) Designated Contracting States:
AT BE CH DE DK ES FI FR GB GR IE IT LI LU MC NL PT SE
Designated Extension States:
AL LT LV RO SI

(30) Priority: 08.10.1996 JP 286102/96

(71) Applicant:
Diafoil Hoechst Co., Ltd.
Tokyo (JP)

(72) Inventor: Fujita, Masato
Sakata-gun, Shiga-ken (JP)

(74) Representative:
TER MEER STEINMEISTER & PARTNER GbR
Mauerkircherstrasse 45
81679 München (DE)

(54) **Laminated polyester film and ink jet printing sheet**

(57) The present invention relates to a laminated polyester film comprising:

a biaxially oriented polyester film as a support film, and
an easily adherent layer comprising a copolymer polyester having, as the structural units, (1) an alicyclic polyvalent hydroxyl compound, (2) an alicyclic polyvalent carboxylic acid compound and (3) an aromatic ester forming compound having ionic functional groups,
said layer being at least monoaxially oriented.

**Description**

BACKGROUND OF THE INVENTION

The present invention relates to a laminated polyester film and an ink jet printing sheet. More particularly, the present invention relates to a laminated polyester film comprising a biaxially oriented polyester film as a support film and an easily adherent resin layer with excellent adhesiveness and antiblock properties disposed on at least one side of the support film, and an ink jet printing sheet produced by forming an ink jet imaging layer on the surface of the easily adherent resin layer of the said laminated polyester film.

Polyester films represented by polyethylene terephthalate (PET) film and polyethylene naphthalate (PEN) film have been popularly used as a base film or support film because of their many excellent properties such as high mechanical strength, dimensional stability, flatness, heat resistance, chemical resistance, optical properties, etc., as well as high cost performance.

However, the biaxially oriented polyester films have high cohesive force because their surface is highly crystallized, so that these films have the defect in which they are poor in adhesiveness to the functional layers disposed thereon. Many proposals have been made for overcoming such a defect, for example, it has been proposed to laminate a polyester layer having low crystallizability on the surface of a polyester film by using coextrusion method, or to prime-coat a water-dispersible polyester or acrylic resin (Japanese Patent Publication (KOKOKU) No. 49-10243, Japanese Patent Application Laid-Open (KOKAI) Nos. 52-19786, 52-19787 and 54-43017, etc.)

The above-mentioned methods, however, also involve their own problems. The support film produced by using as its primer a polyester-based resin having an aliphatic hydroxyl compound singly as its structural unit, shows a blocking tendency when the film is rolled up. On the other hand, the support film produced by using an acrylic resin is poor in adhesiveness to an aqueous functional layer.

As a result of the present inventor's earnest studies to solve the above problems, it has been found that a laminated film comprising a biaxially oriented polyester film as a support film and an easily adherent resin layer comprising a copolymer polyester and oriented at least monoaxially, has a good adhesiveness to an aqueous functional layer and excellent antiblock properties.

The present invention has been attained based on the above finding.

SUMMARY OF THE INVENTION

An object of the present invention is to provide a laminated polyester film having an easily adherent resin layer which shows good adhesiveness to an aqueous functional layer such as an ink jet imaging layer for ink jet printing and excellent antiblock properties.

Another object of the present invention is to provide an ink jet printing sheet comprising the said laminated polyester film and an ink jet imaging layer provided on the surface of the easily adherent resin layer of the said film.

To accomplish the above aims, in a first aspect of the present invention, there is provided a laminated polyester film comprising a biaxially oriented polyester film as a support film, and an easily adherent layer comprising a copolymer polyester having as the structural units (1) an alicyclic polyvalent hydroxyl compound, (2) an alicyclic polyvalent carboxylic acid compound and (3) an aromatic ester-forming compound having ionic functional groups,

the said layer being oriented at least monoaxially.

In a second aspect of the present invention, there is provided an ink jet printing sheet comprising the said laminated polyester film as defined in the first aspect and an ink jet imaging layer provided on the surface of the easily adherent resin layer of the said laminated film.

DETAILED DESCRIPTION OF THE INVENTION

The present invention is described in detail below.

The laminated polyester film according to the present invention comprises a biaxially oriented polyester film as a support film, and an easily adherent resin layer which is laminated on at least one side of the said support film and which comprises a copolymer polyester having as the structural units (1) an alicyclic polyvalent hydroxyl compound, (2) an alicyclic polyvalent carboxylic acid compound and (3) an aromatic ester-forming compound having ionic functional groups. The ink jet printing sheet according to the present invention comprises the said laminated polyester film and an ink jet imaging layer provided on the surface of the easily adherent resin layer of the said laminated film.

Typical examples of the polyesters usable for forming the said biaxially oriented polyester film in the present invention include polyethylene terephthalate (PET) in which 80 mol% or more of the structural units is constituted by ethylene terephthalate, polyethylene-2,6-naphthalate (PEN) in which 80 mol% or more of the structural units is constituted by ethylene-2,6-naphthalate, and poly-1,4-cyclohexanedimethylene terephthalate (PCT) in which 80 mol% or more of the structural units is constituted by 1,4-cyclohexanedimethylene terephthalate. Further, poly-1,4-butylene terephthalate (PBT), polyethylene isophthalate and the like are also usable.

As the copolymer units other than the above-mentioned preferential structural units, there can be used diol units such as propylene glycol, 1,3-butylene glycol, 2,3-butylene glycol, neopentyl glycol, trimethylene glycol, tetramethylene glycol, hexamethylene glycol, diethylene glycol, triethylene glycol, polyethylene glycol, polytetramethylene glycol, polyalkylene glycol, etc., and the ester-forming derivatives of isophthalic acid, 2,7-naphthalenedicarboxylic acid, 5-sodium sulfoisophthalic acid, oxalic acid, malonic acid, succinic acid, adipic acid, azelaic acid, sebacic acid, diphenyl ether dicarboxylic acid, oxymonocarboxylic acid and the like. As the said polyester, there can be used homopolymers, copolymers and their blends with other resins.

The biaxially oriented polyester film may contain the added particles, precipitated particles, catalyst residue or the like as a surface projection forming agent for imparting appropriate slip properties to the film surface. The type, size and amount of such a projection forming agent may be properly decided according to the desired slipperiness, transparency and other properties of the produced film. The said polyester film may also contain other additives such as antistatic agent, stabilizer, lubricant, crosslinking agent, antiblock agent, antioxidant, ultraviolet absorber, light screen, colorant and the like, if necessary.

The film may further contain a white pigment such as titanium oxide, barium sulfate, magnesium oxide, etc., for whitening the film, a resin incompatible with the polyester for reducing the film density, and a void-forming agent such as polypropylene, polystyrene, poly-4-methylpentene and the like. The polyester film may be constituted by a multilayer construction, and a part of its layers may adopt a polymer other than polyester.

In the laminated polyester film of the present invention, an easily adherent resin layer is provided on at least one side of the biaxially oriented polyester film as a support film. In the present invention, it is essential that the easily adherent resin layer of the said laminated film comprises a copolymer polyester having as its structural units (1) an alicyclic polyvalent hydroxyl compound, (2) an alicyclic polyvalent carboxylic acid compound and (3) an aromatic ester forming compound having ionic functional groups, and that the said easily adherent resin layer is oriented at least monoaxially. The presence of such an easily adherent resin layer contributes to the enhancement of adhesion between the biaxially oriented polyester film (support film) and the ink jet imaging layer described later, and to the improvement of the antiblock properties of the produced film.

The alicyclic polyvalent hydroxyl compound used in the present invention is usually a di- to tetra-valent, preferably divalent hydroxyl compound. Examples of such alicyclic divalent hydroxyl compounds include 1,4-cyclohexanedimethanol, 1,3-cyclohexanedimethanol, 1,2-cyclohexanedimethanol, 1,3-cyclopentanedimethanol, and their ester-forming derivatives. Of these compounds, 1,4-cyclohexanedimethanol, 1,3-cyclohexanedimethanol and 1,2-cyclohexanedimethanol having cyclohexane rings are preferred.

The amount of the alicyclic polyvalent hydroxyl compound units used in the present invention is usually 2 to 90 mol%, preferably 5 to 90 mol%, more preferably 10 to 70 mol% based on the total hydroxyl compound units contained in the copolymer polyester. When the amount of the alicyclic polyvalent hydroxyl compound units used is less than 2 mol%, the sufficient adhesiveness and antiblock properties may not be obtained.

As the said alicyclic polyvalent carboxylic acid compound, usually a di- to tetra-valent, preferably divalent carboxylic acid compound is used. Examples of such alicyclic divalent carboxylic acid compounds include 1,4-cyclohexanedicarboxylic acid, 1,3-cyclohexanedicarboxylic acid, 1,2-cyclohexanedicarboxylic acid, 1,3-cyclopentanedicarboxylic acid, 4,4'-bicyclohexyldicarboxylic acid and their ester forming derivatives. Of these compounds, 1,4-cyclohexanedicarboxylic acid, 1,3-cyclohexanedicarboxylic acid and 1,2-cyclohexanedicarboxylic acid having cyclohexane rings are preferably used in the present invention.

The amount of the alicyclic polyvalent carboxylic acid compound units used in the present invention is usually 2 to 50 mol%, preferably 5 to 50 mol%, more preferably 10 to 40 mol% based on the total carboxylic acid compound units contained in the copolymer polyester. When the amount of the alicyclic polyvalent carboxylic acid compound units used is less than 2 mol%, the sufficient adhesiveness and antiblock properties may not be obtained.

As the aromatic ester forming compound having ionic functional groups, there are used the aromatic ester forming compounds having an acid group such as sulfonic acid, carboxylic acid, phosphoric acid, etc., and/or a salt thereof. Examples of such compounds include the aromatic carboxylic acid compounds having sulfonic acid or a salt thereof, the aromatic hydroxyl compounds having sulfonic acid or a salt thereof, and the aromatic hydroxyl compounds having carboxylic acid or a salt thereof. The aromatic carboxylic acid compounds containing a sulfonate are preferred.

Examples of the aromatic carboxylic acid compounds containing a sulfonate include the sulfonates such as 2-sulfoterephthalic acid, 4-sulfoisophthalic acid, 5-sulfoisophthalic acid, 4-sulfophthalic acid, 4-sulfonaphthalene-2,7-dicarboxylic acid, 5-(4-sulfophenoxy)isophthalic acid and the like. The counter ions of these salts include alkaline metal ions, ammonium ion, etc., of which sodium ion and ammonium ion are preferred.

In view of water solubility and water resistance, the amount of the aromatic ester forming compound units having ionic functional groups is usually 1 to 15 mol%, preferably 1 to 12 mol%, more preferably 3 to 12 mol% based on the total hydroxyl compound units or total carboxylic acid compound units contained in the copolymer polyester. In case where the aromatic ester forming compound units having ionic functional groups exceed 15 mol%, it is difficult to obtain the sufficient adhesiveness and antiblock properties of the easily adherent resin layer. In case where the said compounds units are less than 1 mol%, adhesiveness and coatability tend to lower when a hydrophilic resin layer such as an ink jet image receiving layer is provided as a topcoat.

As the materials of the copolymer polyester in the present invention, there can be used the hydroxyl compounds and carboxylic acid compounds beside the above-mentioned three types of ester forming compounds. The hydroxyl compounds usable for the said purpose include aliphatic hydroxyl compounds, aromatic hydroxyl compounds and the like. Among them, the aliphatic hydroxyl compounds are preferred. The aliphatic hydroxyl compounds include, for example, ethylene glycol, 1,2-propyleneglycol, 1,3-propylene glycol, 1,3-propanediol, 1,4-butanediol, 1,6-hexanediol, 2-methyl-1,5-pentanediol, neopentyl glycol, diethylene glycol, triethylene glycol, poly(ethylene oxide)diol, poly(propylene oxide)diol, poly(tetramethylene oxide)diol, glycerin, trimethylolpropane, and their ester forming derivatives.

Of the above-mentioned aliphatic hydroxyl compounds, ethylene glycol or its condensates such as ethylene glycol, di(ethylene glycol), tri(ethylene glycol), poly(ethylene oxide)diol, poly(propylene oxide)diol and the like. are preferred for imparting high adhesiveness to the easily adherent resin layer. In case where a condensed diol of ethylene glycol is used, its amount is usually not more than 20 mol%, preferably not more than 10 mol%, more preferably not more than 5 mol% based on the total hydroxyl compound units contained in the copolymer polyester. In case where the condensed diol of ethylene glycol exceeds 20 mol%, the antiblock properties and adhesiveness tend to lower.

Examples of the said aromatic hydroxyl compounds include p-xylylene glycol, bisphenol A-ethylene glycol adduct, hydroquinone, phenols, and their ester forming derivatives. The amount of the aromatic hydroxyl compound units used is usually not more than 5 mol%, preferably not more than 2 mol% based on the total hydroxyl compound units contained in the copolymer polyester. In case where the aromatic hydroxyl compound units exceed 5 mol%, it may be difficult to obtain satisfactory adhesiveness, and further, it may be difficult to conduct the co-stretch of the easily adherent resin layer and the support polyester film.

The said carboxylic acid compounds include aromatic carboxylic acid compounds and aliphatic carboxylic acid compounds. Examples of the aromatic carboxylic acid compounds are terephthalic acid, isophthalic acid, orthophthalic acid, phthalic acid, phthalic anhydride, 4,4'-diphenyldicarboxylic acid, 2,5-naphthalenedicarboxylic acid, 2,6-naphthalenedicarboxylic acid, p-hydroxybenzoic acid, and their ester forming derivatives. Of these aromatic carboxylic acid compounds, terephthalic acid, isophthalic acid and their ester forming derivatives are preferably used.

The amount of the aromatic carboxylic acid compound units used in the present invention is usually not more than 98 mol%, preferably not more than 95 mol%, more preferably not more than 90 mol% based on the total carboxylic acid units contained in the copolymer polyester. The smaller the amount of the aromatic carboxylic acid compound units, the higher the adhesiveness of the easily adherent resin layer. However, the lower limit of the amount of the aromatic carboxylic acid compound units used is usually 50 mol% based on the total carboxylic acid units contained in the copolymer polyester. When the amount of the aromatic carboxylic acid compound units is less than 50 mol%, the easily adherent resin layer may not be provided with satisfactory antiblock properties.

Examples of the said aliphatic carboxylic acid compounds include adipic acid, azelaic acid, sebacic acid, dodecanedicarboxylic acid, glutaric acid, trimellitic acid, trimesic acid, trimellitic acid anhydride, and their ester forming derivatives. The amount of the aliphatic carboxylic acid compound units used is usually not more than 5 mol%, preferably not more than 2 mol% based on the total carboxylic acid units contained in the copolymer polyester. In case where the aliphatic carboxylic acid compound units exceed 5 mol%, the easily adherent resin layer may fail to show the satisfactory antiblock properties although it has good adhesiveness.

In a preferred embodiment of the present invention, the ratio of the aromatic carboxylic acid units to the total carboxylic acid units in the copolymer polyester is usually in the range of 50 to 98 mol%, preferably 60 to 90 mol%, and the ratio of the alicyclic carboxylic acid units to the total carboxylic acid units in the copolymer polyester is usually in the range of 2 to 50 mol%, preferably 10 to 40 mol%.

The said copolymer polyester can be obtained by a conventional polyester polycondensation method. The glass transition temperature (Tg) of the copolymer polyester is usually in the range of 40 to 100°C, preferably 45 to 95°C, more preferably 50 to 90°C. In case where the glass transition temperature of the said polyester is below 40°C, the easily adherent resin layer may not be provided with satisfactory antiblock properties, while in case where the glass transition temperature exceeds 100°C, the desired stretch properties may not be provided in the step of co-stretching the easily adherent resin layer and the support polyester film.

The copolymer polyester content in the easily adherent resin layer is usually not less than 50 parts by weight, preferably in the range of 50 to 98 parts by weight, more preferably 60 to 95 parts by weight based on the weight of the easily adherent resin layer. In case where the polyester content is less than 50 parts by weight, the resin layer may fail to have sufficient adhesiveness.

If necessary, the said easily adherent resin layer may further comprise, in addition to the said copolymer polyester, a water-soluble or water-dispersible binder resin(s). As such a binder resin, there can be used, for instance, a polyester having a different composition from the said copolymer polyester, polyurethane, acrylic resin, vinyl resin, epoxy resin, amide resin and the like. These resins may have substantially a composite skeletal structure through copolymerization.

Examples of the binder resins having a composite structure include acrylic resin graft polyester, acrylic resin graft polyurethane, vinyl resin graft polyester, vinyl resin graft polyurethane and the like. In the present invention, a binder resin may be used in an amount of usually not more than 50 parts by weight, preferably not more than 30 parts by weight, based on the easily adherent resin layer.

Further, in the present invention, a crosslinking compound may be added to the easily adherent resin layer, if necessary. Examples of the crosslinking compounds usable in the present invention include hydroxymethylated or hydroxyalkylated urea-based, melamine-based, guanamine-based, acrylamide-based or polyamide-based compounds, polyamines, epoxy compounds, oxazoline compounds, aziridine compounds, blocked isocyanate compounds, silane coupling agents, titanium coupling agents, zirco-aluminate based coupling agents, metal chelates, organic acid anhydrides, organic peroxides, heat- or light-reactive vinyl compounds, photosensitive resins and the like.

These crosslinking compounds are principally crosslinked with the functional group of the resin contained in the easily adherent resin layer to improve cohesiveness, surface hardness, scuff resistance, solvent resistance and water resistance of the easily adherent resin layer. It is preferable to select a crosslinking compound which shows a high crosslinking efficiency with the functional group contained in the easily adherent resin. The crosslinking compound used in the present invention may be either a low-molecular weight compound or a high polymer as far as it contains two or more reactive functional groups in the molecule.

As the crosslinking reactive compound, there can be used melamine compounds, blocked isocyanate compounds, organic acid anhydrides and the like in case where the functional group in the easily adherent resin is a hydroxyl group. In case where the functional group is an organic acid or its anhydride, there can be used epoxy compounds, melamine compounds, oxazoline compounds, metal chelates and the like. In case where the functional group is an amine, epoxy compounds can be used. The amount of the crosslinking reactive compound blended is usually not more than 50 parts by weight, preferably in the range of 3 to 30 parts by weight, more preferably 3 to 15 parts by weight based on the weight of the easily adherent resin layer.

The easily adherent resin layer may contain the inactive particles for improving slip properties of the produced film. The inactive particles used in the present invention may be either inorganic or organic particles. Examples of the inorganic inactive particles usable in the present invention include silica sol, alumina sol, calcium carbonate, titaniumoxide and the like. Examples of the organic inactive particles are the fine particles containing a homopolymer or copolymer such as polystyrene resin, polyacrylic resin, polyvinyl resin or the like, and the crosslinked version of these fine particles. The softening temperature or decomposition temperature of these inactive particles is usually not lower than 200°C, preferably not lower than 250°C, more preferably not lower than 300°C. The size of the inactive particles d is preferably selected so as to satisfy the following formula (1) or (2) wherein d is an average diameter of the particles and L is an average thickness of the easily adherent resin layer.

$$1/3 < (d/L) < 3 \qquad\qquad (1)$$

$$1/2 < (d/L) < 2 \qquad\qquad (2)$$

The easily adherent resin layer may also contain one or more of other additives such as surfactant, defoaming agent, coatability improver, thickener, low-molecular antistatic agent, organic lubricant, antioxidant, ultraviolet absorber, foaming agent, dye, pigment and the like in small quantities, if necessary.

The easily adherent resin layer may be formed either on one side or on both sides of the polyester film. In case where the said resin layer is formed on one side alone of the film, a layer different from the easily adherent resin layer may be formed on the opposite side to provide other properties to the laminated polyester film of the present invention. In order to improve coatability of the easily adherent resin layer forming solution on the film or adhesiveness of the resin layer to the film, a chemical treatment or a discharge treatment may be conducted to the support polyester film before coating. Also, a discharge treatment may be conducted to the easily adherent resin layer for further improving the surface properties of the laminated polyester film of the present invention.

The thickness of the easily adherent resin layer is usually in the range of 0.01 to 2 μm, preferably 0.02 to 0.5 μm, more preferably 0.03 to 0.2 μm. When the resin layer thickness is less than 0.01 μm, no satisfactory adhesiveness may be obtained, and when the resin layer thickness exceeds 2 μm, the produced film may show unsatisfactory in antiblock properties.

The known methods can be employed for producing the said biaxially oriented polyester film. For example, it can be produced by a method which comprises mixing the previously dried polyester chips and the necessary additives, feeding the mixture to an extruder hopper, melting and kneading the mixture at a temperature of 250 to 300°C, extruding the melt from the die into the sheet-like shape, quenching the extrudate on the surface of a casting drum (rotary chilling drum) of a temperature not higher than about 70°C to obtain a non-stretched sheet, stretching this sheet 4-fold or more, preferably 9-fold or more in the machine and/or transverse directions, and heat-setting the produced film at a temperature of 120 to 200°C.

The method of forming the easily adherent resin layer disposed on the biaxially oriented polyester film surface is not specified, but usually a coating method or a coextrusion method is used, and preferably a method is employed in which an easily adherent resin solution is applied during the production process of polyester film, more specifically an easily adherent resin solution is coated on the non-stretched sheet surface and dried, or an easily adherent resin solution is coated on the monoaxially stretched film surface and dried. Of these methods, the method in which an easily adherent resin solution is coated on a non-stretched or monoaxially stretched film, and the coating layer is dried and cured in the step where the laminated film is heat-treated, is preferred in terms of economy.

A method comprising a combination of some of the above-mentioned coating processes, if necessary, may be employed for forming the easily adherent resin layer. For example, a method may be used in which a first layer is coated on the non-stretched sheet surface, then the sheet is stretched monoaxially, and a second layer is coated thereon and dried. In the film obtained by this method, the first layer is the easily adherent resin layer. In the present invention, it is preferred in terms of manufacturing cost to employ a method in which an easily adherent resin solution is coated on the monoaxially stretched film; the film, either after dried or in a still undried state, is stretched in the direction orthogonal to the monoaxial stretching direction; and heat treatment is conducted to the film.

Various types of coaters, for example, reverse coater, gravure coater, rod coater, air doctor coater, etc., such as shown in Y. Harasaki: Coating System, Maki Shoten, 1979, can be used for coating the easily adherent resin solution on the polyester film surface.

The easily adherent resin solution is usually prepared by using a solvent principally comprising water for safety and sanitary reasons. The solvent principally comprising water may contain small quantities of an organic solvent for the purpose of improving resin dispersibility in water or for the purpose of improving film forming performance. Such an organic solvent should be used in an amount within dissolving in water.

The organic solvent used in the present invention is not specified. Examples of the organic solvents usable in the present invention include aliphatic or alicyclic alcohols such as n-butyl alcohol, n-propyl alcohol, isopropyl alcohol, ethyl alcohol and methyl alcohol; glycols such as propylene glycol, ethylene glycol and diethylene glycol; glycol derivatives such as n-butyl cellosolve, ethyl cellosolve and propylene glycol monomethyl ether; ethers such as dioxane and tetrahydrofuran; esters such as ethyl acetate and amyl acetate; ketones such as methyl ethyl ketone and acetone; and amides such as N-methylpyrrolidone. If necessary, two or more of these organic solvents may be used in combination.

The ink jet printing sheet according to the present invention is constituted by forming an ink jet imaging layer for ink jet printing on the surface of the easily adherent resin layer of the said laminated film. Such an ink jet imaging layer can be formed by coating a forming solution of an ink jet imaging layer on the easily adherent resin layer surface according to a known coating method such as mentioned above. As the coating solution for forming the ink jet imaging layer, there can be used, for instance, an aqueous solution containing a binder resin such as polyvinyl alcohol, polyvinyl butyral or polyvinyl acetal, a crosslinking agent and additives such as colloidal silica, or a solution prepared by adding an alcohol and/or other additives to the said aqueous solution. The thickness of the ink jet imaging layer is usually not smaller than 1 $\mu$m, preferably 3 to 50 $\mu$m, more preferably 5 to 30 $\mu$m. The ink jet printing sheet of the present invention can quickly absorb the ink and is capable of clear-cut printing with little ink blotting.

The ink jet printing sheet of the present invention is suited for use in the aqueous ink jet printing systems (bubble jet printer, Mach jet printer, plotter by these systems, etc.), and can be used as OHP film for the said ink jet recording, label, plotter film and such.

According to the present invention, as described above, there are provided a laminated film having excellent adhesiveness and antiblock properties and applicable to all types of films and film-like articles for which an aqueous ink, water-soluble ink or hydrophilic ink is used for printing, such as OHP film, labels, plotter film, photographic film, photographic printing paper film, bar cord labels, magnetic cards, graphic arts, etc., and an ink jet printing sheet using the said laminated film as base.

EXAMPLES

The present invention is described in more detail with reference to the examples thereof, but it should be understood that these examples are merely intended to be illustrative and not to be construed as limiting the scope of the invention. The methods used for determination of various properties in the present invention are as defined below. In the following Examples and Comparative Examples, all "parts" and "%" are by weight unless otherwise noted.

(1) Aqueous ink adhesion

Using an ink jet printer (BJC-600J, mfd. by Canon Inc.), printing was made on the surface of each specimen film having an ink jet image receiving layer, and one day after printing, the printed surface of the specimen film was crosscut to form 100 squares at intervals of 1 mm. An 18 mm wide cellophane adhesive tape was pasted on the crosscut surface and then peeled off. The condition of the printed specimen film surface after peeling of the tape was visually observed and evaluated according to the following criterion.

○ (good):    Less than 10% of print peeled off.

△ (medium):    10 to less than 50% of print peeled off.

X (bad) :    50% or more of print peeled off.

It is desirable that the films according to the present invention have the evaluation of ○.

(2) Antiblock properties

Two support films were placed one on the other so that their easily adherent resin layers faced each other, and pressed under the conditions 40°C, 80% RH and 10 kg/cm$^2$ for 20 hours, and the degree of blocking between the films was determined from the load required for separating the pressed films, according to the method of ASTM D 1893 in which the degree of blocking between the pressed plastic films is measured and quantified. Evaluation was made according to the following criterion.

○ (good):    50 to less than 100 g of load was required.

△ (medium):    100 to less than 250 g of load was required.

X (bad):    250 g or more load was required.

It is desirable that the films according to the present invention have the evaluation of ○.

The copolymer polyesters and the binder resins used for forming the easily adherent resin layers in the Examples are shown below.

Polyesters (A1 to A3):

The compositions of the polyesters used for forming the easily adherent resin layers are shown in Table 1.

Table 1

| Specimen | A1 | A2 | A3 |
|---|---|---|---|
| 〈Carboxylic acid compounds〉 | | | |
| Terephthalic acid | 40 | 90 | 78 |
| Isophthalic acid | 30 | - | 20 |
| Cyclohexanedicarboxylic acid | 20 | - | - |
| 5-Sodiumsulfoisophthalic acid | 10 | 10 | 2 |
| 〈Hydroxyl compounds〉 | | | |
| Cyclohexanedimethanol | 25 | - | - |
| Ethylene glycol | 70 | 80 | 60 |
| Diethylene glycol | 5 | 20 | 20 |
| Triethylene glycol | - | - | 20 |
| 〈Properties〉 | | | |
| Glass transition temperature (°C) | 55 | 60 | 40 |

Binder resin (polyurethane) B1:

A polyurethane produced by using isophorone diisocyanate as isocyanate component, a polyester polyol comprising terephthalic acid, isophthalic acid, ethylene glycol and diethylene glycol as polyol component, and 2,2-dimethylolpropionic acid as chain extender. The glass transition temperature of this polyurethane was 40°C.

Binder resin (acrylic resin) B2:

An acrylic resin produced by using as starting materials methyl methacrylate, N,N-dimethylaminoethyl methacrylate, 2-hydroxyethyl methacrylate and butyl acrylate.

Crosslinking agent C1:

Methylolmelamine (hydroxymethylation degree: 5 to 6).

Inactive particles D:

Silica sol with an average particle size of 0.05 $\mu$m.

Example 1

Polyethylene terephthalate (intrinsic viscosity: 0.65) was melt extruded at 280 to 300°C and cast onto a rotary chilling drum using an electrostatic pinning technique to obtain an approximately 720 $\mu$m thick amorphous sheet. This sheet was stretched 3.7 times in the machine direction at 85°C, further stretched 3.9 times in the transverse direction at 100°C and then heat treated at 210°C to obtain a 50 $\mu$m thick biaxially oriented polyester film.

An aqueous dispersion containing 95 parts of the copolymer polyester A1 and 5 parts of inactive particles (silica sol D) was coated on one side of the said polyester film at the stage after stretching in the machine direction and before stretching in the transverse direction so that a coating thickness after stretching and drying is 0.1 $\mu$m, to obtain a laminated film. Further, a coating solution containing silica sol principally comprising an 8% aqueous solution of polyvinyl alcohol (saponification degree = 98 to 99 mol%; polymerization degree = 1,700) was coated on the said coating layer to form an aqueous ink jet imaging layer. The thickness of this aqueous ink jet imaging layer after drying was 9 $\mu$m.

Examples 2-4 and Comparative Examples 1-4

The laminated films were produced by conducting the same procedure as in Example 1 except that the composition of the easily adherent resin layer was changed as shown in Table 2.

Table 2

| | Copolymer PE (A) | Binder resin (B) | Crosslinking agent (C) | Coating thickness L ($\mu$m) | d/L |
|---|---|---|---|---|---|
| Example 1 | A1=95 | - | - | 0.1 | 0.5 |
| Example 2 | A1=95 | - | - | 0.05 | 1 |
| Example 3 | A1=65 | - | - | 0.05 | 1 |
| | A2=30 | - | - | | |
| Example 4 | A1=90 | - | C1=5 | 0.05 | 1 |
| Comparative Example 1 | A2=95 | - | - | 0.05 | 1 |
| Comparative Example 2 | A3=95 | - | - | 0.05 | 1 |
| Comparative Example 3 | - | B1=95 | - | 0.05 | 1 |
| Comparative Example 4 | - | B2=95 | - | 0.05 | 1 |
| Abbreviations used in Table 2: PE: polyester d: average particle diameter (0.05 $\mu$m) of silica sol | | | | | |

The results of evaluation of the support films and the ink jet printing sheets are shown collectively in Table 3.

Table 3

|  | Adhesion | Antiblock properties |
|---|---|---|
| Example 1 | ○ | ○ |
| Example 1 | ○ | ○ |
| Example 1 | ○ | ○ |
| Example 1 | ○ | ○ |
| Comparative Example 1 | △ | ○ |
| Comparative Example 2 | ○ | X |
| Comparative Example 3 | X | ○ |
| Comparative Example 4 | X | △ |

**Claims**

1. A laminated polyester film comprising:

   a biaxially oriented polyester film as a support film, and
   an easily adherent layer comprising a copolymer polyester having, as the structural units, (1) an alicyclic polyvalent hydroxyl compound, (2) an alicyclic polyvalent carboxylic acid compound and (3) an aromatic ester forming compound having ionic functional groups,
      said layer being at least monoaxially oriented.

2. A laminated polyester film according to Claim 1, wherein said copolymer polyester comprises:

   (1) an alicyclic polyvalent hydroxyl compound in an amount of 2 to 90 mol% based on the whole hydroxyl compounds,
   (2) an alicyclic polyvalent carboxylic acid compound in an amount of 2 to 50 mol% based on the whole carboxylic acid compounds, and
   (3) an aromatic ester forming compound having ionic functional groups in an amount of 1 to 15 mol% based on the whole hydroxyl compounds or the whole carboxylic acid compounds.

3. A laminated polyester film according to Claim 1, wherein said copolymer polyester further contains ethylene glycol as a structural unit.

4. A laminated polyester film according to Claim 3, wherein the content of said ethylene glycol is 2 to 98 mol% based on the whole hydroxyl compounds contained in said copolymer polyester.

5. A laminated polyester film according to Claim 1, wherein said copolymer polyester further contains an aromatic carboxylic acid compound as a structural unit.

6. A laminated polyester film according to Claim 5, wherein the content of said aromatic carboxylic acid compound is 50 to 98 mol% based on the whole carboxylic acid compounds.

7. A laminated polyester film according to Claim 9, wherein said aromatic carboxylic acid compound is terephthalic acid, isophthalic acid, 4,4'-diphenyldicarboxylic acid, 2,5-naphthalenedicarboxylic acid, 2,6-naphthalenedicarboxylic acid or their ester forming derivatives.

8. A laminated polyester film according to Claim 1, wherein the alicyclic polyvalent hydroxyl compound (1) is a divalent hydroxyl compound having cyclohexane ring.

9. A laminated polyester film according to Claim 1, wherein the alicyclic polyvalent carboxylic acid compound (2) is a divalent carboxylic acid compound having cyclohexane ring.

**10.** A laminated polyester film according to Claim 1, wherein the aromatic ester forming compound having ionic functional groups (3) is an aromatic carboxylic acid compound having a sulfonate, an aromatic hydroxyl compound having a sulfonate, or an aromatic hydroxyl compound having a carboxylate.

**11.** A laminated polyester film according to Claim 1, wherein said easily adherent resin layer contains the inactive particles, and the average diameter (d) of said inactive particles and the average thickness (L) of the easily adherent resin layer satisfy the following formula (1):

$$1/3 < (d/L) < 3 \tag{1}$$

**12.** A laminated polyester film according to Claim 1, wherein the thickness of said easily adherent resin layer is 0.01 to 2 $\mu$m.

**13.** A laminated polyester film according to Claim 1, wherein said easily adherent resin layer is formed by applying an easily adherent resin solution during the production process of polyester film.

**14.** An ink jet printing sheet comprising the easily adherent resin layer of the laminated film as defined in Claim 1 and an ink jet imaging layer formed on the surface of said easily adherent resin layer.